# NEW EUROPEAN PATENT SPECIFICATION

(11) **EP 1 444 408 B2**
(45) Date of publication and mention of the opposition decision: **30.05.2018**
(45) Mention of the grant of the patent: 02.11.2006
(21) Application number: 02787647.3
(22) Date of filing: 12.11.2002
(51) Int. Cl.: E04B 1/78, D04H 1/72, B32B 5/02, B32B 5/26, D04H 1/4209, D04H 1/4226, D04H 1/58, D04H 13/00, E04B 1/76, F16L 59/02

(54) **LAYERED MINERAL FIBRE ELEMENT AND ITS METHOD OF MANUFACTURE**
MEHRSCHICHTIGES DÄMMELEMENT AUS MINERALWOLLE UND SEIN HERSTELLUNGSVERFAHREN
ELEMENT EN FIBRES MINERALES STRATIFIEES ET PROCEDE DE FABRICATION ASSOCIE

(30) Priority: 14.11.2001 EP 01309600
(43) Date of publication of application: 11.08.2004
(73) Proprietor: Rockwool International A/S, 2640 Hedehusene (DK)
(72) Inventor: CRIDLAND, Ian, 2720 Vanloese (DK); HANSEN, Per, Hindsgaul, 2000 Frederiksberg (DK)
(74) Representative: Gill Jennings & Every LLP
(86) International application number: PCT/EP2002/012616
(87) International publication number: WO 2003/042468

(56) References cited:
- EP-A- 0 672 803
- EP-A- 0 893 243
- EP-A2- 0 277 500
- EP-A2- 1 026 301
- WO-A-94/16164
- WO-A-97/36034
- WO-A-99/51535
- DD-A- 155 897
- DE-A- 19 941 746
- DE-C- 4 225 840
- DE-U- 1 867 167
- US-A- 4 917 750
- US-B1- 6 248 420

## Description

This invention relates to insulation elements which comprise a mineral fibre batt and which can be shaped to fit around curved surfaces, for instance as pipe or boiler insulation.

It is conventional to make insulation elements by collecting mineral fibres, together with a bonding agent, on a conveyor as a web of a desired thickness, consolidating the web to the desired density and then curing the bonding agent so as to provide a batt which comprises a bonded mineral fibre network bonded by the bonding agent. The batt is generally made as a continuous product typically 1 or 2 metres wide and is cut to the desired width and length to provide an element which has first and second major surfaces separated by the thickness of the batt.

The resultant elements are satisfactory for insulation elements to be applied to flat surfaces, but the batt is relatively stiff and so cannot easily be conformed to shaped surfaces.

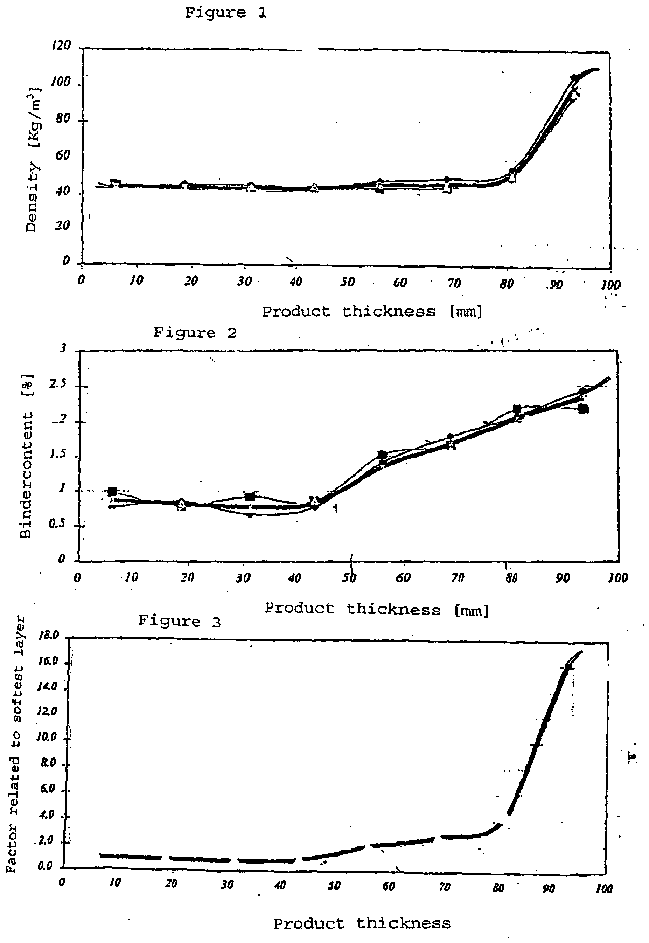

If parallel slits are cut in the first surface the batt can then be conformed with its second surface adjacent a pipe, but the insulation is then variable around the pipe and this is unsatisfactory. If parallel grooves are cut in the second surface then the batt can be conformed around a pipe with its second surface adjacent the pipe to obtain uniform insulation (if the grooves are of the right dimensions) but it is inconvenient to make such products. An example of such a product is shown in Figure 3 of EP-A-672,803.

The situation is not improved when, as in that publication, the batt comprises two layers. For instance in EP 672,803 the first layer (providing the first surface) contains reinforcing filaments and additional binder. More usually the first layer is the high density layer of a "dual density" product, for instance as described in WO88/00265. Such a product is made by slicing the top layer off the web containing uncured bonding agent, subjecting this top layer to vertical compression so as to increase its density, rejoining the consolidated top layer on to the remainder of the web so that it intermeshes with that, and then curing the assembly. In such a product, the amount of bonding agent (based on the weight of fibres) is usually substantially uniform through the thickness of the dual density product.

Because flat batts cannot easily be conformed to pipes or other curved surfaces and because of the difficulties of cutting grooves to allow conformation, insulation which is to be applied to curved or other complex shapes is usually conformed to the desired shape before curing of the bonding agent, and the bonding agent is then cured so that the batt permanently has the required shape.

This provides a good insulation element for the relevant pipe or other complex shape but it has two major disadvantages. One disadvantage is that each shaped batt can only be used for a correspondingly shaped surface. The other disadvantage is that storage and transport of the shaped batts is very inconvenient.

It would therefore be desirable to be able to provide insulation elements which are flat batts which do not have to have deep grooves cut in one face but which can easily be conformed to fit against a curved surface such as a pipe or boiler.

US 4917750 describes a process in which an uncured primary non-woven mineral fibre web is severed into at least two secondary non-woven mineral fibre webs, and at least one of the secondary non-woven mineral fibre webs is compressed, and the two secondary non-woven mineral fibre webs are repositioned into contiguous relationship and the binder agent in the mineral fibre webs is cured to form a multi-ply mineral fibre web or strip.

WO 97/36034 also describes a process in which a fleece is divided into layers and layers of different densities are formed before the layers are fixed back together and cured in a curing oven.

According to the invention we provide an insulation element according to claim 1.

In practice, as explained below, the same bonding agent is used, or bonding agent having substantially the same bonding effect are used, throughout the batt but in different amounts in the different layers. The reference to the bonding on a normalised basis merely means that the bonding in each layer is substantially proportional to the amount of bonding agent in each layer. Accordingly the amount of bonding agent in the first layer is greater than the amount in the second layer and, if there is an intermediate layer, the amount in the intermediate layer is between the amounts in the first and second layers. The amount in the first layer is at least twice the amount in the second layer, preferably at least 3 times and often at least 5 times and it can be up to 10,15 or even 20 times the amount in the second layer, with the amounts in the intermediate layer usually representing a gradual transition from the amount in the first layer to the amount in the second layer.

When different bonding agents are used, the bonding on a normalised basis is determined by comparing the modulus of elasticity of the second layer upon completion of normal curing, (i. e. , without any subsequent physical or other treatment to change the bonding) with the modulus of elasticity that would have been obtained in that layer upon completion of normal curing if the amount of bonding agent (by weight of fibres) in the first layer had been applied to the second layer. Thus if the modulus of elasticity of the second layer, as initially cured, has a value of x, and if that second layer had instead been made using the amount and type of bonding agent in the first layer then the second layer would have a modulus of elasticity of kx, where k is a value above 1, typically at least 2 or 3 and often at least 5, for instance up to 10,15 or even 20.

The combination of increased density and increased bonding (on a normalised basis) in the first layer results in the first layer having a stiffness very much higher than would have been predicted from consideration of its density alone or its bonding alone or from a mere addition of the two. This means that it is possible to give very high stiffness and strength to the product in the length and breadth directions, and also in the vertical direction against the first surface, and so it is not necessary to rely upon the strength of the second layer to contribute significantly to the overall strength of the product.

It is necessary for the second layer to have some bonding agent since otherwise the second layer will disintegrate during handling, but the amount of bonding agent in the second layer often only needs to be sufficient to provide physical integrity to the layer during handling.

The element of the invention therefore has a first layer which is relatively thin and has high stiffness per unit thickness, and a second layer which is relatively thick, provides good insulation and has very low stiffness per unit thickness, and so can easily be compressed in the length or width direction. If there is an intermediate layer, it will have an intermediate stiffness. Because of this construction, the element can be wrapped around curved or other complex shapes with the first layer outermost, because the thin outer layer can be bent adequately and the second layer, and to some extent the intermediate layer if present, can collapse lengthwise or laterally sufficient to allow the conformation of the ele ment to the shaped surface.

An extra advantage of these elements is that the part of the element which will be hottest in use (because it is closest to the pipe or boiler) is the second layer, where the amount of bonding agent is much lower than in conventional pipe or boiler insulation. As a result of reducing the amount of binder which is exposed to the highest temperatures, the amount of volatiles that may be driven off the binder in use is reduced.

The thickness of the first layer is usually at least 3 or 5% of the total thickness of the element (while it is still flat) and may be as much as 10%. Usually it is not more than 25% and usually it is below 20% of the total thickness. In order to have sufficient stiffness, the first layer is usually at least 10mm thick and often at least 15mm. It can be as much as 20mm but usually it is not more than about 25 or 30mm thick (in the flat product as first made).

The density of the first layer is usually at least twice and often as much as 3, or sometimes or even 5, times the density of the second layer.

The density of the first layer is usually at least 40kg/m³, often at least 80kg/m³ and preferably at least 100kg/m³, for instance up to 150 or 200kg/m³ or up to 280kg/m³.

When (as is preferred) all binder is a conventional binder for mineral fibre batts (such as a phenolic binder), the amount of binder in the first layer is typically from 1.5 to 6%, and is usually at least 2%, often 3 to 5%, based on the weight of fibres.

The density in the second layer is usually at least 20kg/m³ and often at least 30 or 40kg/m³. It is usually below 100kg/m³, and generally below 90kg/m³.

The amount of binder (if it is a conventional binder for mineral fibre batts) in the second layer is typically at least 0. 1% and usually at least 0. 3%. It may be as much as 2% but usually it is not more than 1.5%.

The thickness of the second layer is usually at least 40% and preferably at least 50% of the thickness of the batt. Even when there is an intermediate layer, the thickness of the second layer is often as much as 60 or 70% of the batt. The second layer usually has a thickness of at least 30mm and often at least 50mm and it can be as much as 100mm or even 150mm.

There can be a relatively sharp transition in both density and bonding from the first layer to the second layer, in which event it is unnecessary to consider the properties of the intermediate layer and the product can, instead, be regarded merely as having two layers, with a brief transition between them. Often, however, it is desirable from the point of view of performance, and/or convenient from the point of view of manufacturing, to have a deliberate intermediate layer.

The amount of bonding in the intermediate layer is higher than the amount in the second layer, being at least 1. 5 or 2 times the amount in the second layer but it is not more than ½, or up to ¾, of the bonding in the first layer. The amount of bonding may decrease gradually across the thickness of the intermediate layer, from a value substantially the value in the first layer to a value substantially the value in the second layer and so the quoted values (up to ¾ of the first layer) relate to the average value.

The density of the intermediate layer must always be substantially less (usually not more than ½, or up to 2/3, of the density in the first layer. It may be as much as 2 times the density in the second layer but usually it has a density close to the density of the second layer, e. g., 1 to 1. 5 times, and preferably 1 to 1.3 times, the density of the second layer. There is usually a stepwise reduction in density over a small distance (e. g., 10-30mm) at the interface between the first and intermediate layers. For instance the density usually decreases by a step of at least 20 or 30kg/m³. The density in the intermediate layer is usually substantially uniform across its thickness, but may decrease gradually in which event the quoted values are the average density.

The thickness of the intermediate layer usually can be as little as 10% (anything less being regarded merely as a transition between the first and second layers) but is usually at least 15% and often at least 20 or 25%, up to around 30, 40 or even 50%, of the total thickness of the batt. For instance it may be at least 10mm and is usually at least 20 or 30mm up to 50mm or even 100mm.

The total thickness of the batt is usually at least 30mm and generally at least 50mm. It can be as much as 250mm but usually it is not more than 150 or 200mm.

The fibres in the batt are generally glass, stone, rock or slag fibres made by centrifugal fiberisation of a melt, preferably by one or more cascade spinner or other centrifugal spinning apparatus, such as one or more spinning cups.

The batt may be formed by assembling separately manufactured first and second layers (optionally with the intermediate layer between them) and pressing them together sufficient that they intermesh enough to give the product integrity during handling. Preferably however the batt is a dual density batt, and thus the mineral fibres are of the same type (e. g. , average dimensions and chemical type) throughout the batt and the general lay down of fibres in the layers is uniform. Thus the batt may have been made by collecting mineral fibres with bonding agent as a web, separating the upper layer, consolidating the upper layer to the density required for the first layer and rejoining the resultant first layer to the remainder of the web, providing increased bonding in the first layer either when initially collecting the fibres as a web or subsequently, and then curing the bonding agent.

A preferred way of achieving the increased concentration of bonding agent is by forming the web which is to be separated from a primary fleece by cross lapping the fleece in conventional manner, wherein the fleece is formed with a greater concentration of bonding agent along one edge than the other, whereby the cross lapping results in the edge having the higher concentration forming the first surface, for instance as described in EP-A-374112 or by applying more binder to the fibres which are to form the first layer than the other fibres when performing a process generally as described in WO99/51535.

Instead of or in addition to relying on differential distribution of bonding agent, it is also possible to achieve differential distribution of fibre quality, for instance with the fibres in the second layer being softer and more flexible and weaker than the fibres in the first layer, which should preferably be stronger and longer and thicker.

The web which is to form the batt (and/or the top layer while separated from the remainder) may be subjected to length compression before final curing, for instance to an extent of 5 to 1 but more usually not more 2 to 1, and generally 1.2 to 1.8 to 1.

Even though the second layer, and the intermediate layer if present, is more compressable transversely or lengthwise than the first layer due to its difference in density and bonding, it is advantageous that it is subjected to a post-treatment, after curing, to make it even softer while still maintaining the integrity that the bonding agent provides.

Preferably the mineral fibre network which extends inwardly from the second surface (and which may be all the second layer and part of the intermediate layer if present or just all or part of the second layer) has an inner portion and an outer portion wherein the second major face of the batt is provided by the outer face of the outer portion and wherein the outer portion has a depth of at least 5mm and is softer than the inner portion and merges with the inner portion through a transition portion of at least 5mm over which the stiffness increases gradually. Thus there is a softer or less stiff outer portion which merges gradually with a stiffer inner portion.

In one embodiment, the fibres of the outer portion have dimensions and structure such that the network is softer, for instance by selecting appropriately the fiberising conditions for these fibres, e. g., as described in WO99/51535.

In another embodiment reduction in stiffness of the outer portion and its merging with the higher stiffness inner portion may be achieved by curing the binder so that the binder gives a softer bonded fibre network in the outer portion than the inner portion, for instance by overcuring the outer portion by overheating it during the cure.

In the invention, reduction in stiffness is achieved by the application of a softening treatment from the second face inwards after curing the bonding agent, so that the treatment has less effect as the depth from the second surface increases. The bonding agent is usually a conventional bonding agent for mineral fibre batts, for instance a phenolic or other curable thermosetting resin. This softening is achieved by mechanical compression after the curing of the bonding agent. This makes the surface softer, presumably because there is fracturing of the mineral fibre network.

The compression may be applied across the entire thickness of the batt after bonding, for instance by passing the batt between the nip of a pair of rollers or a sequence of rollers, often having decreasing nip height, or by passing the batt through conveyors having a decreasing separation. For instance the nip may have depth of 20 to 90%, usually 30 to 70%, of the thickness of the cured batt.

Preferably, however, the height compression is applied predominantly from the second face by passing the bonded and cured batt through a nip between a surface which supports the first face and compression means for temporarily compressing the batt at the second face. This will result in fracturing the bonded network in the bonded outer portion of the second face, leaving the bonded network closer to the first layer substantially unchanged.

The preferred compression means comprise at least one compression-applying roller having a diameter less than the total thickness of the batt and which defines a nip which has a depth of 20 to 90% of the thickness of the batt after curing (giving 10 to 80% temporary height compression). Usually the nip has a depth of at least 30 or 40% of the thickness of the batt and generally not more than 70 or 80% of the height of the batt. For instance it may have a depth of around 55% of the height of the batt, thus giving 45% temporary height compression.

The diameter of the or each compression applying roller must be relatively small in order to concentrate the compression forces in the desired region. The diameter is usually less than 75%, and often less than 50%, of the thickness of the batt. It is usually at least 30mm, and is usually below 75mm, often below 40 or 50mm.

The support surface is preferably substantially planar but it can be a surface with a large radius of curvature and which thus gives substantially the same support as a planar surface. For instance the support can be a planar plate or conveyor or drum of large diameter, e.g., at least 5 times the thickness of the batt.

Preferably the compression means comprise a plurality of parallel, compression applying, rollers each having a diameter substantially less than the thickness of the batt (as explained above) and which define with the substantially planar support a nip which decreases in distance as the batt enters the nip, and the final, narrowest, nip preferably is within the range described above. Preferably the nip increases in distance as the batt leaves the nip. Preferably each roller, in plan view, overlaps each adjacent roller and preferably each defines a step of 3 to 15, often 5 to 10mm, up (or down) from the next.

The outer face of the second layer is usually the second surface of the mineral batt, although a soft covering may be applied if desired.

The outer face of the first layer is usually the first surface of the mineral batt, although the insulation element may have a coherent sheet or layer of suitable material adhered to the first surface of the batt. For instance the element may comprise the batt and a woven or non-woven fabric or a metal foil or a plastic film adhered to the first surface of the batt.

This is particularly useful when, as is sometimes desired, the first layer is scored on its outer face in one or more substantially parallel directions to facilitate convex bending of the first layer (i.e., bending of the element around the second layer). Thus the first layer may be provided with parallel score lines to permit preferential bending along these lines. Scoring the first layer to facilitate bending is especially useful when the first layer has very high density, for instance above 150kg/m³ and especially above 200kg/m³. The score lines preferably extend only partially through the thickness of the first layer, so as to facilitate bending but without significantly weakening the element.

Instead of the first surface of the batt being provided by the outer face of the first layer (optionally with a coherent sheet over it), the first surface of the batt may be provided by an upper layer of bonded mineral fibre network which is usually even denser and/or more highly bonded than the first layer and which is preferably scored along substantially parallel lines to provide adequate flexibility. This upper layer is usually thin and is usually formed by applying fibres and bonding agent on to a dual density product, usually before curing. A suitable product and process is described in WO00/73600.

The batt, and therefore the element, is usually flat. It may be cut through its thickness from the second face at least to the first layer, and optionally partly through the first layer, to allow it to adopt a folded flat form. For instance there may be a single cut extending across its width (or length) so that the element can be folded along the cut in two parts (generally two equal halves) with the first face of one part overlying the first face of the other part. Alternatively there may be two substantially parallel cuts so that the first face of each resultant end part can be folded to overlie the first face of the central part, between the cuts. For instance there may be substantially parallel cuts at positions one quarter and three quarters of the distance form one end of the element. Although the cut or cuts usually do not extend through the first layer of the batt, they can extend through is layer if there is fabric or other sheet material on the first surface in order to hold the cut pieces together as a single element.

This means that a single insulation element can be provided having twice whatever is the convenient maximum length for the transport of the mineral fibre batts. For instance if normal transport allows for transport of batts having a length of, say, 2 metres this means that an insulation element can be provided having a length of 4 metres. Typically by this means the batts can be provided conveniently as having lengths of as much as 5 or 6 metres, often up to 4.8 metres, but can be folded flat to a length of 3 metres, for instance 2.4 metres. When the batt has a length of 4.8 metres, it can be used, alone, to provide a cylindrical wrap around a pipe, furnace or other object where the outer peripheral dimension of the batt in position is up to 4.8 metres.

Accordingly it is now possible, for the first time, to produce a cylindrical wrap having a peripheral length of, for instance, 3 metres or more in a flat pack having a maximum length of less than this, typically not more than 2 to 2.5 metres. This flat packed element, or several such elements, can be packed on a pallet of conventional size and which can be formed of mineral wool, for instance following the general teaching of mineral wool packaging disclosed in EP-A-0946394.

In order to facilitate fixing of the batt in position on the pipe or other surface, draw cords can be secured on or in the first layer, for instance between the first layer and any coherent sheet adhered to it, whereby the draw cords can be pulled from each end of the batt towards each other and secured to one another, so as to provide a hoop tie around the batt on the pipe or other surface. Each draw cord can be, for instance, a wire fixed in a zig-zag arrangement

In order to facilitate conformation of the batt to a chosen curved surface, the cured batt, often after any height compression or other post treatment, is preferably caused to bend around a curved guide, with the first surface outermost. The elasticity in the batt should be such that the batt will resume its substantially flat configuration after this procedure, but the procedure will facilitate subsequent bending of the batt.

The invention includes the substantially flat batt and also the batt when conformed around a curved surface such as a pipe or boiler. Thus, in use, the batt is conformed to a convex curved surface with the second face concavely adjacent to the curved surface and the first face being convexly curved.

The invention includes a method of insulating a curved surface, comprising laying the second face of the batt against the surface and conforming the batt against the surface and securing the batt in the conformed position, for instance by tightening and securing draw cords in or on the batt.

The extent to which any particular element can satisfactorily be curved around a pipe, boiler or other curved surface will depend on the thickness and the longitudinal compressability of the second layer and any intermediate layer and on the curvature of the surface. Preferably the inner surface can be compressed at least 20%, and generally around 25 or 30% and perhaps up to 35 or 40% without causing buckling or other failure. In practice batts according to the invention having a thickness of up to 200mm can generally be conformed around a pipe having a diameter above 1m, while the batt will generally need to have a thickness of less than about 100mm if it is to be satisfactorily conformed around a pipe of 0.5 metres. However by optimising the gradations in stiffness it is possible to obtain tighter curves than this.

As an example, a web is formed by the general process described in WO99/51535 and with more bonding agent on one side of the primary fleece than the other, and is then cross lapped, subjected to length compression of 1.4:1 and then subjected to a dual density treatment. It is then passed through a curing oven to produce a bonded web 100mm thick having a first layer about 15mm thick and having a density of 100 to 120kg/m³ and a binder content of 2.5 to 3%, and a second layer about 50mm thick and having a density of around 45kg/m³ and a binder content of around 0.7%, and an intermediate layer about 35mm thick having a density about 50kg/m³ and a binder content decreasing from about 2% to about 0.7% (average about 1.2%).

After curing the batt was passed between a flat plate to support the first face and a series of narrow parallel rollers defining a nip of decreasing height and then increasing height, where the minimum height was about 55% of the original batt thickness, thereby creating an outer softened portion.

The resultant batt could then satisfactorily and easily be conformed around pipes having diameters of 0.5m or more, without any buckling or other difficulties in fitting.

In order to demonstrate a typical distribution of density, binder and stiffness, in a reference product without the post cure compression, reference can be made to the accompanying graphs wherein the first face is at 100mm and the second face is at 0mm.

Figure 1 shows the density distribution at different positions across the thickness. It is apparent that the first layer occupies the top depth extending from around the 80 or 85mm position to 100mm, with the density below that being substantially constant, although it was slightly higher over the range 50 to 80mm.

Figure 2 shows the binder distribution and shows how this decreases gradually down to a position at about 45 or 50mm, so that the range from around 45 or 50mm to around 80 or 85mm is the intermediate layer. The binder distribution and the density are then uniform from about 45 or 50mm to zero, and thus this constitutes the second layer.

Figure 3 is a plot of the strength calculated having regard to the binder and density, wherein the second layer is given a value of unity. It will be seen that the strength, and thus the softness and modulus of elasticity, is uniform throughout the second layer, increases slightly in the intermediate layer, and then increases hugely in the first layer. In practice, the post cure compression will reduce the stiffness value in the region close to 0mm to below unity.

## Claims

1. An insulation element comprising a mineral fibre batt which has first and second major surfaces and which comprises
a first layer comprising a bonded mineral fibre network bonded by a bonding agent and which extends inwardly away from the first surface,
a second layer which comprises a bonded mineral fibre network bonded by a bonding agent and which extends inwardly away from the second surface and either an intermediate layer comprising a bonded mineral fibre network bonded by a bonding agent and which intermeshes with the first and second layers,
or, if the intermediate layer is not present, the second layer intermeshes with the first layer
**characterised in that**
the first layer has a thickness which is at least 5mm and which is less than 30% of the total thickness of the batt,
the second layer has a thickness which is at least 20mm and is at least 30% of the thickness of the batt, and
the density of the first layer is at least 1.5 times the density of the second layer and of the intermediate layer (if present), and
the bonding of the first layer, on a normalised basis, is greater than the bonding of the second layer and the bonding of the intermediate layer (if present) on a normalised basis is intermediate the bonding in the first and second layers, and
in which (a) a single bonding agent is used throughout the batt or different bonding agents are used having substantially the same bonding effect and (b) wherein the amount of bonding agent in the first layer is greater than the amount in the second layer and (c) if there is an intermediate layer, the amount in the intermediate layer is between the amounts in the first and second layers, all amounts being weight percent bonding agent based on weight of fibres, and wherein the amount in the first layer is 2 to 20 times the amount in the second layer and the amount in the intermediate layer, if present, is at least 1.5 times the amount in the second layer but is not more than ¾ the amount in the first layer, all amounts being weight percent bonding agent based on weight of fibres, and
in which the mineral fibre network which extends inwardly from the second surface has an inner portion and an outer portion wherein the second major surface of the batt is provided by the outer surface of the outer portion and wherein the outer portion has a depth of at least 5mm and is softer than the inner portion due to post-cure compression of the bonded network in the outer portion.

2. An element according to any preceding claim in which the density of the first layer is 2 to 5 times the density of the second layer and is 80 to 280kg/m³, and the density of the second layer is 20 to 90kg/m³ and the density of the intermediate layer, if present, is 1 to 1.5 times the density of the second layer.

3. An element according to any preceding claim in which the amount of bonding agent, as weight percent bonding agent based on weight of fibres, in the first layer is from 1.5 to 6%.

4. An element according to any preceding claim in which the thickness of the first layer is at least 10mm.

5. An element according to any preceding claim in which the thickness of the first layer is below 20% of the total thickness of the batt.

6. An element according to any preceding claim in which the total thickness of the batt is at least 50mm.

7. An element according to any preceding claim in which the thickness of the first layer is 5 to 25% of the total thickness of the batt and is 10 to 25mm, the thickness of the second layer is 40 to 70% of the total thickness and the thickness of the intermediate layer, if present, is 15 to 40% of the total thickness, and the total thickness of the batt is 50 to 200mm.

8. An element according to any preceding claim in which the mineral fibre network which extends inwardly from the second surface has an inner portion and an outer portion wherein the second major surface of the batt is provided by the outer face of the outer portion and wherein the outer portion has a depth of at least 5mm and is softer than the inner portion and merges with the inner portion through a transition portion of at least 5mm over which the stiffness increases gradually.

9. An element according to any preceding claim having a coherent sheet of a fabric, a foil or a film adhered to the first surface.

10. An element according to any preceding claim in which the first layer is scored on its outer face in one or more substantially parallel directions.

11. An element according to any preceding claim in which the batt is a flat batt and is cut through its thickness from the second surface to the first layer and optionally partly through the first layer to allow the batt to adopt a folded flat configuration.

12. An element according to any preceding claim including draw cords secured on or in the first layer.

13. An element according to any preceding claim packed in flat, or folded flat, form.

14. A method of insulating a curved surface comprising laying the second surface of the batt of an element according to any preceding claim against the curved surface and conforming the batt against the curved surface and securing the batt in the conformed position around the curved surface.

15. A method according to claim 14 in which the second surface of the batt is concavely adjacent to the curved surface and the first surface of the batt is convexly curved.

16. A method of making an element according to any of claims 1 to 13 comprising:
(1) fiberising a mineral melt by at least one cascade spinner or other centrifugal fiberising apparatus,
(2) collecting the fibres as a web containing uncured bonding agent,
(3) separating the upper layer,
(4) consolidating the upper layer to the density required for the first layer, so that the density of the first layer is at least 1.5 times the density of the second layer and so that the first layer has a thickness which is at least 5mm,
(5) rejoining the resultant first layer to the remainder of the web so that the second layer intermeshes with the first layer or, if an intermediate layer is present, the intermediate layer intermeshes with the first and second layers,
(6) providing increased bonding in the first layer either when initially collecting the fibres as a web or subsequently, so that the bonding of the first layer, on a normalised basis, is greater than the bonding of the second layer, and then
(7) curing the bonding agent,
whereby as a result of the method the first layer has a thickness which is less than 30% of the total thickness of the batt, and the second layer has a thickness which is at least 20mm and is at least 30% of the thickness of the batt, the method comprising passing the bonded and cured batt through the nip between a surface which supports the first surface and compression means for temporarily compressing the batt at the second surface.

17. A method according to claim 16 in which the web is made by cross lapping a primary fleece having a concentration of bonding agent along one edge greater than along the other edge whereby cross lapping resulted in the edge having the higher concentration providing the first layer.

18. A method according to claim 16 in which the compression means comprise a plurality of parallel compression-applying rollers each having a diameter less than the thickness of the batt and which define a nip having a minimum thickness of 20 to 70% of the height of the batt.

19. A method according to any of claims 16 to 18 further comprising bending the element around a curved guide, with the first surface outermost, and then restoring the element to a flat configuration.

## Patentansprüche

1. Isolierelement, das ein Mineralfaservlies umfasst, welches erste und zweite Hauptoberflächen aufweist und das umfasst
eine erste Schicht, die ein gebundenes Mineralfasernetzwerk umfasst, das durch ein Bindemittel gebunden ist und die sich von der ersten Oberfläche weg nach innen erstreckt,
eine zweite Schicht, die ein gebundenes Mineralfasernetzwerk umfasst, das durch ein Bindemittel gebunden ist und die sich von der zweiten Oberfläche weg nach innen erstreckt, und
entweder eine Zwischenschicht, die ein gebundenes Mineralfasernetzwerk, das durch ein Bindemittel gebunden ist, umfasst und in die erste und die zweite Schicht eingreift,
oder, wenn die Zwischenschicht nicht vorhanden ist, die zweite Schicht und die erste Schicht ineinandergreifen,
**dadurch gekennzeichnet, dass**
die erste Schicht eine Dicke aufweist, die mindestens 5 mm beträgt und die weniger als 30% der Gesamtdicke des Vlieses ausmacht,
die zweite Schicht eine Dicke aufweist, die mindestens 20 mm beträgt und die mindestens 30% der Gesamtdicke des Vlieses ausmacht, und
die Dichte der ersten Schicht mindestens das 1,5-fache der Dichte der zweiten Schicht und der Zwischenschicht (falls vorhanden) ist, und
die Bindung der ersten Schicht, auf normalisierter Basis, größer als die Bindung der zweiten Schicht ist und die Bindung der Zwischenschicht (falls vorhanden) auf normalisierter Basis zwischen der Bindung in der ersten Schicht und der zweiten Schicht liegt, und
wobei (a) ein einzelnes Bindemittel im ganzen Vlies verwendet wird oder verschiedene Bindemittel mit im Wesentlichen der gleichen Bindewirkung verwendet werden und (b) wobei die Menge an Bindemittel in der ersten Schicht größer ist als die Menge in der zweiten Schicht und (c) wenn es eine Zwischenschicht gibt, die Menge der Zwischenschicht zwischen den Mengen in der ersten und der zweiten Schicht liegt, wobei alle Mengen gewichtsprozentiges Bindemittel auf Basis des Gewichts der Fasern sind, und
wobei die Menge in der ersten Schicht das 2- bis 20-fache der Menge in der zweiten Schicht ist und die Menge in der Zwischenschicht, falls vorhanden, mindestens das 1,5-fache der Menge in der zweiten Schicht ist, aber nicht mehr als ¾ der Menge in der ersten Schicht ist, wobei alle Mengen gewichtsprozentiges Bindemittel auf Basis des Gewichts der Fasern sind, und
wobei das Mineralfasernetzwerk, das sich von der zweiten Oberfläche nach innen erstreckt, einen inneren Teil und einen äußeren Teil aufweist, wobei die Hauptoberfläche des Vlieses durch die äußere Oberfläche des äußeren Teils bereitgestellt wird und wobei der äußere Teil eine Tiefe von mindestens 5 mm aufweist und weicher ist als der innere Teil aufgrund einer Komprimierung nach Härtung des gebundenen Netzwerks in dem äußeren Teil.

2. Element nach irgendeinem vorhergehenden Anspruch, in dem die Dichte der ersten Schicht das 2- bis 5-fache der Dichte der zweiten Schicht ist und 80 bis 280 kg/m³ beträgt und die Dichte der zweiten Schicht 20 bis 90 kg/m³ beträgt und die Dichte der Zwischenschicht, falls vorhanden, das 1- bis 1,5-fache der Dichte der zweiten Schicht ist.

3. Element nach irgendeinem vorhergehenden Anspruch, in dem die Menge an Bindemittel, als gewichtsprozentiges Bindemittel auf Basis des Gewichts der Fasern, in der ersten Schicht 1,5 bis 6% beträgt.

4. Element nach irgendeinem vorhergehenden Anspruch, in dem die Dicke der ersten Schicht mindestens 10 mm ist.

5. Element nach irgendeinem vorhergehenden Anspruch, in dem die Dicke der ersten Schicht unter 20% der Gesamtdicke des Vlieses ist.

6. Element nach irgendeinem vorhergehenden Anspruch, in dem die Gesamtdicke des Vlieses mindestens 50 mm ist.

7. Element nach irgendeinem vorhergehenden Anspruch, in dem die Dicke der ersten Schicht 5 bis 25% der Gesamtdicke des Vlieses ist und 10 bis 25 mm beträgt, die Dicke der zweiten Schicht 40 bis 70% der Gesamtdicke ist und die Dicke der Zwischenschicht, falls vorhanden, 15 bis 40% der Gesamtdicke ist und die Gesamtdicke des Vlieses 50 bis 200 mm beträgt.

8. Element nach irgendeinem vorhergehenden Anspruch, in dem das Mineralfasernetzwerk, das sich von der zweiten Oberfläche nach innen erstreckt, einen inneren Teil und einen äußeren Teil aufweist, wobei die zweite Hauptoberfläche des Vlieses durch die Außenseite des äußeren Teils bereitgestellt wird und wobei der äußere Teil eine Tiefe von mindestens 5 mm aufweist und weicher als der innere Teil ist und mit dem inneren Teil über einen Übergangsteil von mindestens 5 mm, über den sich die Steifigkeit allmählich erhöht, verschmilzt.

9. Element nach irgendeinem vorhergehenden Anspruch, das eine zusammenhängende Bahn eines Gewebes, einer Folie oder eines Films aufweist, die an der ersten Oberfläche haftet.

10. Element nach irgendeinem vorhergehenden Anspruch, in dem die erste Schicht auf der Außenseite in einer oder mehreren im Wesentlichen parallelen Richtungen eingekerbt ist.

11. Element nach irgendeinem vorhergehenden Anspruch, in dem das Vlies ein ebenes Vlies ist und durch die Dicke von der zweiten Oberfläche zur ersten Oberfläche und gegebenenfalls teilweise durch die erste Schicht geschnitten ist, damit das Vlies eine gefaltete Konfiguration annehmen kann.

12. Element nach irgendeinem vorhergehenden Anspruch, das Zugschnüre einschließt, die an oder in der ersten Schicht befestigt sind.

13. Element nach irgendeinem vorhergehenden Anspruch, in ebener oder gefalteter ebener Form gepackt.

14. Verfahren zur Isolierung einer gekrümmten Oberfläche, welches das Legen der zweiten Oberfläche des Vlieses von einem Element nach irgendeinem vorhergehenden Anspruch gegen die gekrümmte Oberfläche und das Anpassen des Vlieses gegen die gekrümmte Oberfläche und das Befestigen des Vlieses in der angepassten Form um die gekrümmte Oberfläche umfasst.

15. Verfahren nach Anspruch 14, in dem die zweite Oberfläche des Vlieses in Nachbarschaft zur gekrümmten Oberfläche konkav und die erste Oberfläche des Vlieses konvex gekrümmt ist.

16. Verfahren zur Herstellung eines Elements nach irgendeinem der Ansprüche 1 bis 13, umfassend:
(1) Zerfasern einer mineralischen Schmelze durch mindestens eine Kaskadenschleudervorrichtung oder eine andere Zentrifugalzerfaserungsvorrichtung.
(2) Sammeln der Fasern als Bahn, die ungehärtetes Bindemittel enthält,
(3) Trennen der oberen Schicht,
(4) Konsolidieren der oberen Schicht auf die für die erste Schicht erforderliche Dichte, sodass die Dichte der ersten Schicht mindestens das 1,5-fache der Dichte der zweiten Schicht und sodass die erste Schicht eine Dicke aufweist, die mindestens 5 mm beträgt,
(5) Wiedervereinigen der sich ergebenden ersten Schicht mit dem Rest der Bahn, sodass die zweite Schicht und die erste Schicht ineinandergreifen oder, wenn eine Zwischenschicht vorhanden ist, die Zwischenschicht in die erste und in die zweite Schicht eingreift,
(6) Bereitstellen einer verstärkten Bindung in der ersten Schicht, entweder wenn zu Beginn die Fasern als Bahn gesammelt werden oder im Anschluss, sodass die Bindung der ersten Schicht, auf normalisierter Basis, größer als die Bindung der zweiten Schicht ist, und dann
(7) Härten des Bindemittels,
wodurch als Ergebnis des Verfahrens die erste Schicht eine Dicke aufweist, die kleiner als 30% der Gesamtdicke des Vlieses ist, und die zweite Schicht eine Dicke aufweist, die mindestens 20 mm beträgt und mindestens 30% der Dicke des Vlieses ist, wobei das Verfahren das Leiten des gebundenen und gehärteten Vlieses durch den Spalt zwischen einer Oberfläche, welche die erste Oberfläche trägt und einer Kompressionseinrichtung zum zeitweisen Komprimieren des Vlieses an der zweiten Oberfläche umfasst.

17. Verfahren nach Anspruch 16, bei dem die Bahn durch kreuzweises Aufeinanderlegen eines primären Vlieses mit einer größeren Konzentration des Bindemittels entlang eines Randes als entlang des anderen Randes gebildet wird, wodurch das kreuzweise Aufeinanderlegen dazu führt, dass der Rand mit der höheren Konzentration die erste Schicht liefert.

18. Verfahren nach Anspruch 16, bei dem die Kompressionseinrichtung eine Mehrzahl von parallelen komprimierenden Walzen umfasst, die jeweils einen kleineren Durchmesser als die Dicke des Vlieses aufweisen und einen Spalt mit einer Mindestdicke von 20 bis 70% der Höhe des Vlieses definieren.

19. Verfahren nach irgendeinem der Ansprüche 16 bis 18, das ferner das Biegen des Elements um eine gekrümmte Führung, wobei die erste Oberfläche die Äußerste ist, und dann das Zurückbringen des Elements in eine ebene Konfiguration umfasst.

## Revendications

1. Élément d'isolation comprenant une natte en fibres minérales qui possède des première et deuxième surfaces principales et qui comprend une première couche comprenant un réseau de fibres minérales liées par un agent liant
et qui se prolonge vers l'intérieur en éloignement de la première surface une deuxième couche qui comprend un réseau de fibres minérales liées par un agent liant et qui se prolonge vers l'intérieur en éloignement de la deuxième surface et
soit une couche intermédiaire comprenant un réseau de fibres minérales liées par un agent liant et qui s'enchevêtre avec les première et deuxième couches,
soit, si la couche intermédiaire n'est pas présente, la deuxième couche d'enchevêtre avec la première couche,
**caractérisé en ce que**
la première couche a une épaisseur d'au moins 5 mm et inférieure à 30 % de l'épaisseur totale de la natte, et
la deuxième couche a une épaisseur d'au moins 20 mm et inférieure à au moins 30% de l'épaisseur de la natte,
la densité de la première couche est au moins 1,5 fois plus élevée que la densité de la deuxième couche et de la couche intermédiaire (si elle est présente), et
la liaison de la première couche, sur une base normalisée, est supérieure à la liaison de la deuxième couche et la liaison de la couche intermédiaire (si elle est présente), sur une base normalisée, est intermédiaire entre la liaison de la première couche et celle de la deuxième couche et
dans lequel (a) un seul agent liant est utilisé partout dans la natte ou différents agents liants ayant substantiellement le même effet de liaison sont utilisés et (b) dans lequel la quantité d'agent liant dans la première couche est supérieure à la quantité d'agent liant dans la deuxième couche et (c), si une couche intermédiaire est présente, la quantité d'agent liant dans la couche intermédiaire est intermédiaire entre celle de la première couche et celle de la deuxième couche, toutes les quantités étant exprimées en pourcentage en poids de l'agent liant par rapport au poids des fibres, et
dans lequel la quantité d'agent liant dans la première couche est de 2 à 20 fois la quantité d'agent liant dans la deuxième couche et la quantité d'agent liant dans la couche intermédiaire, si elle est présente, est d'au moins 1,5 fois la quantité d'agent liant dans la deuxième couche mais ne dépasse pas ¾ de la quantité d'agent liant dans la première couche, toutes les quantités étant exprimées en pourcentage en poids d'agent liant par rapport au du poids des fibres et
dans lequel le réseau de fibres minérales qui se prolonge vers l'intérieur depuis la deuxième surface possède une partie interne et une partie externe dans lequel la deuxième surface principale de la natte est formée par la surface externe de la partie externe et dans lequel la partie externe a une profondeur d'au moins 5 mm et est plus douce que la partie interne en raison d'une compression post-traitement du réseau lié dans la partie externe.

2. Élément selon l'une quelconque des revendications précédentes dans lequel la densité de la première couche est 2 à 5 fois plus élevée que la densité de la deuxième couche et va de 80 à 280 kg/m³, et la densité de la deuxième couche est comprise entre 20 à 90 kg/m3 et la densité de la couche intermédiaire, si elle est présente, est 1 ou 1,5 fois plus élevée que la densité de la deuxième couche.

3. Élément selon une quelconque revendication précédente dans lequel la quantité d'agent liant, exprimée en pourcentage en poids d'agent liant par rapport au poids des fibres, dans la première couche est comprise entre 1,5 à 6 %.

4. Élément selon une quelconque revendication précédente dans lequel l'épaisseur de la première couche est d'au moins 10 mm.

5. Élément selon une quelconque revendication précédente dans lequel l'épaisseur de la première couche est inférieure à 20 % de l'épaisseur de la natte.

6. Élément selon une quelconque revendication précédente dans laquelle l'épaisseur totale de la natte est d'au moins 50 mm.

7. Élément selon une quelconque revendication précédente dans lequel l'épaisseur de la première couche est égale à 5 à 25 % de l'épaisseur totale de la natte et est de 10 à 25 mm, l'épaisseur de la deuxième couche est égale à 40 à 70 % de l'épaisseur totale et l'épaisseur de la couche intermédiaire, si elle est présente, est égale à 15 à 40 % de l'épaisseur totale et l'épaisseur totale de la natte est de 50 à 200 mm.

8. Élément selon une quelconque revendication précédente dans lequel le réseau de fibres minérales qui se prolonge vers l'intérieur depuis la deuxième surface possède une partie interne et une partie externe dans lequel la deuxième surface principale de la natte est formée par la face externe de la partie externe et dans lequel la partie externe a une profondeur d'au moins 5 mm et est plus douce que la partie interne et fusionne la partie interne par le biais d'une partie de transition d'au moins 5 mm sur laquelle la rigidité augmente graduellement.

9. Élément selon une quelconque revendication précédente possédant une feuille cohérente d'un tissu, d'une feuille mince ou d'un film collé(e) à la première surface.

10. Élément selon une quelconque revendication précédente dans lequel la première couche est entaillée sur sa face externe dans une ou plusieurs directions substantiellement parallèles.

11. Élément selon une quelconque revendication précédente dans lequel la natte est une natte plate et est coupée dans son épaisseur depuis la deuxième surface jusqu'à la première couche et facultativement en partie à travers la première couche pour permettre à la natte d'adopter une configuration plate repliée.

12. Élément selon une quelconque revendication précédente comprenant des cordons de tirage fixés sur ou dans la première couche.

13. Élément selon une quelconque revendication précédente emballé à plat ou en configuration plate repliée.

14. Procédé d'isolation d'une surface courbe comprenant l'application de la deuxième surface de la natte d'un élément selon une quelconque revendication précédente contre la surface courbe et la conformation de la natte à la surface courbe et la fixation de la natte en position conformée autour de la surface courbe.

15. Procédé selon la revendication 14 dans lequel la deuxième surface de la natte a une courbure concave adjacente à la surface courbe et la première surface de la natte a une courbure convexe.

16. Procédé de fabrication d'un élément selon l'une quelconque des revendications 1 à 13 comprenant les étapes consistant à :
(1) fibrer un minéral fondu avec au moins une centrifugeuse à cascade ou autre appareil de fibrage centrifuge,
(2) rassembler les fibres sous la forme d'un voile contenant un agent liant non durci,
(3) séparer la couche supérieure,
(4) consolider la couche supérieure à la densité requise pour la première couche, de telle sorte que la densité de la première couche soit au moins 1,5 fois plus dense que la densité de la deuxième couche et de telle sorte que la première couche ait une épaisseur d'au moins 5 mm,
(5) unir la première couche obtenue au reste du voile de telle sorte que la deuxième couche s'enchevêtre avec la première couche, ou, si une couche intermédiaire est présente, que la couche intermédiaire s'enchevêtre avec les première et deuxième couches,
(6) apporter un liage accru dans la première couche soit au moment du rassemblement initial des fibres sous la forme d'un voile soit ultérieurement, de telle sorte que le liage de la première couche, sur une base normalisée, soit supérieur au liage de la deuxième couche, puis
(7) durcir l'agent liant,
si bien qu'en conséquence du procédé, la première couche a une épaisseur inférieure à 30 % de l'épaisseur totale de la natte, et la deuxième couche a une épaisseur qui est d'au moins 20 mm et d'au moins 30 % de l'épaisseur de la natte, le procédé comprenant le passage de la natte liée et durcie dans un espacement entre une surface qui accueille la première surface et un moyen de compression pour comprimer temporairement la natte au niveau de la deuxième surface.

17. Procédé selon la revendication 16 dans lequel le voile est fabriqué par recouvrement croisé d'un molleton principal ayant une concentration d'agent liant le long d'un bord supérieure à celle le long de l'autre bord si bien que le recouvrement croisé fait que le bord ayant la concentration la plus élevée forme la première couche.

18. Procédé selon la revendication 16 dans lequel le moyen de compression comprend une pluralité de cylindres parallèles appliquant une compression, chacun d'un diamètre inférieur à l'épaisseur de la natte et qui définissent un espacement ayant une épaisseur minimale de 20 à 70 % de la hauteur de la natte.

19. Procédé selon l'une quelconque des revendications 16 à 18 comprenant en outre la courbure de l'élément autour d'un guide courbe, avec la première surface étant le plus à l'extérieur, puis la remise de l'élément dans une configuration à plat.
